Europäisches Patentamt

European Patent Office

Office européen des brevets

(19)

(11) Publication number: **0 237 284**
**A2**

# (12) EUROPEAN PATENT APPLICATION

(21) Application number: 87301939.2

(22) Date of filing: 05.03.87

(51) Int. Cl.³: **C 08 L 67/00**
//(C08L67/00, 51:00)

(30) Priority: 07.03.86 JP 50193/86

(43) Date of publication of application:
16.09.87 Bulletin 87/38

(84) Designated Contracting States:
AT BE CH DE ES FR GB GR IT LI LU NL SE

(71) Applicant: POLYPLASTICS CO. LTD.
30 Azuchimachi 2-chome
Higashi-ku Osaka-shi(JP)

(72) Inventor: Takahashi, Katsuhiko
324, Miyashita
Fuji-shi Shizuoka(JP)

(72) Inventor: Nakano, Michio
885-11, Miyajima
Fuji-shi Shizuoka(JP)

(74) Representative: Livsey, Gilbert Charlesworth
Norris et al,
HYDE, HEIDE & O'DONNELL 146 Buckingham Palace Road
London SW1W 9TR(GB)

(54) Polyester composition improved in fluidity.

(57) A polyester composition which comprises (A) 50 to 98 percent by weight of a thermoplastic polyester, (B) 1 to 25 percent by weight of a flame retarding agent and (C) 1 to 25 percent by weight of a modified polymer of ethylene which has been obtained by graft polymerizing alpha-, beta-unsaturated carboxylic acid or a derivative thereof on a polymer of ethylene or a copolymer of ethylene and alpha-olefin having 3 or more carbon atoms.

EP 0 237 284 A2

Polyester Composition improved in Fluidity

This invention relates to a flame retardant reinforced polyester resin composition having improved flowability. More specifically, the invention relates to a thermoplastic polyester resin composition which can provide improved flowability without detriment to excellent flame retardant characteristics and good mechanical properties of the reinforced resin composition incorporating a flame retarder and, where required, an inorganic filler or fillers, and which is suitable for use in molding parts having a very thin structure and/or a very complicated configuration.

- 1 -

Thermoplastic polyester resins, such as, for example, polyalkylene terephthalate resin, have excellent mechanical and electrical properties and good moldability. Therefore, they are used as engineering plastics in a wide range of applications. Where they are used in those areas of application which require higher mechanical strength and rigidity, they are used in the form of a composition containing inorganic fibers . such as glass fiber.

Since such resin is flammable, on the other hand, a flame retarder and a flame retarding assistant are incorporated into the resin to impart flame retardant properties to it, in the case where the resin is used in electrical parts and the like. Generally, however, such inorganic filler adversely affects the flowability of the resin, and especially where a flame retarder is present in conjuntion therewith, the flowability of the resin is further affected, which fact poses a great difficulty in the case where parts having a thin structure, long dimensions, and/or a complicated configuration are to be molded. Thus, depend-

0237284

ing upon the configuration of the part to be molded, the addition of such filler is subject to limitations. Where addition of flame retarders and fillers is required in larger quantities, stock charge deficiency may occur in the case of certain types of moldings, molding being thus rendered impossible. Even if molding is made possible by changing the thickness of the part, deterioration in molding speed and molding efficiency cannot be avoided.

In recent years, electrical and electronic parts are in a trend toward miniturization, and in these areas, parts having a thinner structure or a more complicated configuration are increasingly required. In addition, the recent trend is that flame retardancy and improved mechanical properties in strength and rigidily are required. While addition of such materials as flame retarder and inorganic filler is effective for the purpose of improving and reinforcing flame retardant characteristics and mechanical properties, the presence of such materials lowers flowability of the resin. As a result, difficulty is caused in connection with the injection molding of these parts, as above stated. Hense, improvements in respect of flowability is demanded.

Hitherto, two methods have been employed for the purpose of resin flowability improvement; one is to increase the

- 3 -

molding temperature, and the other is to use base polymers having a lower degree of polymerization. However, in the case where a flame retarder is present, if the molding temperature is substantially increased, deterioration of the properties is accelerated through thermal decomposition of the resin. Therefore, such method is undesirable. The other method is also likely to sacrifice the excellent properties of the resin. With either of these methods, it is impracticable to obtain a thin-structure part having good mechanical strength. As such, there is a strong need for a resin composition which permits production of a thin-structure molded part having good flowability, high flame retardancy, and high stiffness.

The present inventors made researches to find a flowability improver for a polyester resin composition containing a flame retarder and an inorganic filler which would permit easy and efficient molding operation without detriment to various excellent properties of the composition and without causing difficulties to molding of thin parts and compled configured parts; and as a result, they arrived at this invention.

The invention provides a flame-retardant polyester resin composition having improved flowability, which is composed of:

, a thermoplastic polyester resin (A);

1-25% by weight (relative to the total weight of the composition) of a flame retarder (B);

1-25% by weight (relative to the total weight of the composition) of a modified ethylene copolymer (C) obtained by grafting an α-, β-unsaturated carboxylic acid or a derivative thereof to an ethylene polymer or a copolymer of ethylene and an α-olefin having 3 or more carbon atoms; and 0-60% by weight (relative to the total weight of the composition) of an inorganic filler (D).

In other words, a polyester composition of the invention comprises (A) 50 to 98 percent by weight of a thermoplastic polyester, (B) 1 to 25 percent by weight of a flame-retarding agent and (C) 1 to 25 percent by weight of a modified polymer of ethylene which has been obtained by graft-polymerizing alpha-, beta-unsaturated carboxylic acid or a derivative thereof on a polymer of ethylene or a copolymer of ethylene and alpha-olefin having 3 or larger carbon atoms.

The thermoplastic polyester used in the invention is an aromatic polyester composed principally of an aromatic dicarboxylic acid residue and a diol residue or an oxy-

- 5 -

carboxylic acid residue.

, Examples of aromatic dicarboxylic acid, as a base monomer for the polyester herein, are bifunctional carboxylic acids, such as terephthalic acid, isophthalic acid, 2-methyl terephthalic acid, 4-methyl terephthalic acid, naphthalene dicarbodylic acid, and diphenyl dicarboxylic acid, or esterifiable derivatives thereof. One or more kinds of them may be used. More particularly, a terephthalic acid or a lower alcoholic ester thereof is preferred.

Examples of diol as another monomer are aliphatic glycols, such as ethylene glycol, propylene glycol, trimethylene glycol, tetramethylene glycol, and neopentyl glycol. One or more kinds of them may be used.

To show examples of oxy-carbodylic acid, oxy-benzoic acid and oxy-naphthoic acid, or esterifiable derivatives thereof.

One or more kinds of polyesters produced by polycondensation of these components as monomer components may be used effectively as an aromatic polyester or polyesters for the purpose of the invention. Among those thermoplastic resins, particularly preferred are polybutylene terephthalates or copolymers composed principally thereof, or mixtures thereof with other thermoplastic resins.

Other thermoplastic resins mentioned herein include,

- 6 -

for example, polyethylene, ethylene-vinyl acetate copolymer, ethylene-acrylate copolymer, polypropylene, ethylene-propylene copolimer, polyamide, polyacetal, polystyrene, styrene-butadiene copolymer, styrene-butadiene-acrylonitrile copolymer, styrene-butadiene-acrylic acid (or acrylate) copolymer, styrene-acrylonitrile copolymer, polycarbonate, polyurethane, fluoroplastic, polyphenylene oxide, polyphenylene sulfide, polybutadiene, polyolefin halide, polyvinyl halide, butyl rubber, and multi-layer graft copolymers composed principally of polyacrylate.   They are used not as essential components, but only in small quantities and in a supplemental way as required.

The flame retarder used in the invention is any of commonly used halogen compounds, phosphorus compounds, and the like.  More particularly, aromatic bromide compounds are preferred.  They include, for example, low-molecular-weight bromine compounds, such as 5-10 bromine substituted compounds of diphenyl ether; bromides of monomers of aromatic carbonate or epoxy compounds derived from bisphenol A, or of polymers thereof; bromides of polystyrene oligomers; and brominated cyanurate compounds.

One or more kinds of such flame retarder may be used. Addition of flame retarders should preferably be in as small quantities as possible, since a large amount of such addition will lower the mechanical properties of the composition.

Generally, the amount of such addition is 1-25% by weight relative to the total weight of the composition, and more preferably it is 2-20% by weight. For the purpose of the invention, it is desirable that a flame retarder should be used together with a flame retarding assistant.

Flame retarding assistants available for the purpose of the invention are metallic oxides and hydroxides, such as antimony trioxide, antimony halide, aluminum hydroxide, and magnesium hydroxide. Addition of such assistant is 0-15% by weight, preferably 1-10% by weight, relative to the total weight of the composition. Addition of such flame retarder and/or flame retarding assistant is often essential particularly where the composition is used for electric or electronic equipment parts. Generally, these flame retarder components have an adverse effect on flowability. Specific modified ethylene polymers, which are each useful as component (C) of the composition of the invention, serve effectively against the adverse effect of the flame retarder components on flowability.

The inorganic filler which is used as required in the invention is any of known inorganic fillers which are generally added to thermoplastic polyesters in order to improve their mechanical and physical properties, such as strength characteristics, rigidity, and hardness, their heat resistance and dimensional strength, and their electrical properties.

- 8 -

Such filler may be used in various different shapes, such as fibrous, lameller, powdery, and granular, according to the purposes for which the composition is used. Examples of such filler are glass fiber, glass foil, milled glass fiber, glass bead, asbestos, tale, clay, kaolin, silica, alumina, potassium titanate fiber, carbon fiber, graphite fiber, micas, wallastonite, calcium silicate, graphite, and other inorganic acids chloride, metallic fibers, metallic foils, and metallic powder. Two or more kinds of such filler may be used according to the purpose.

More particularly, glass fiber and mixtures of glass fiber and other inorganic fillers are important and most effective for the purpose of the invention.

Such inorganic fillers may be used as they are but in order that their favorable effects on mechanical strength and other characteristics may be further enhanced, it is desirable to treat the fillers with a surface treating agent or a coupling agent, or add them simultaneously. Such surface treating agent or coupling agent to be used for this purpose may be any of known functional compounds which are conventionally used as such, for example, epoxy compounds, isocyanate compounds, silane compounds, and titanate compounds. Examples of these substances are epoxy silanes, such as γ-glycidoxypropyl triethoxy silane, γ-glycidoxypropyl trimethoxy silane, and β-(3,4-epoxycyclohexyl)

- 9 -

ethyltrimethoxy silane; polyepoxy compounds, such as bisphenol A type epoxy resin, bisphenol F type epoxy resin,
resorcin type epoxy resin, tetrahydroxyphenylmethane epoxy
resin, novolak type epoxy resin, vinyl cyclohexene dioxide,
dicyclopentadiene oxide, and 3,4-epoxy-6-methyl cyclohexylmethyl-3,4-epoxy-6-methyl cyclohexene carbonate; isocyanate
compounds, such as 2,4-tolylene diisocyanate, 4,4'-diphenylmethane diisocyanate, dianisidine diisocyanate, tolydene
diisocyanate, hexamethylene diisocyanate, methaxylylene diisocyanate, 1,3-naphthalene diisocyanate, triphenylmethane
triisocyanate, polyphenyl isocyanate, and derivatives of
aforesaid diisocyanates (oligomers and cyanurates higher
than polymer urethanes and urethadione dimers); aminosilanes,
such as γ-aminopropyl triethoxysilane, and β-aminoethoxy-γ-
aminopropyl trimechoxysilane; vinyl trichlorosilane, vinyl
triethoxysilane, vinyl tris-β-methoxyethoxy silane, γ-
mechacrylopropyl trimethoxy silane, n-(dimethoxymethyl silylpropyl) ethylene diamine, and n-(trimethoxysilylpropyl)
ethylene diamine.

The proportion of such inorganic filler is 0-60% by
weight, preferably 5-50% by weight, relative to the total
weight of the composition. The proportion of aforesaid
functional compound surface treating agent used in combination
with such filler is 0-10% by weight, preferably 0.05-5% by
weight.

Addition of such inorganic filler is very useful for improvement of various characteristic aspects, such as mechanical strength and rigidity, according to the purposes for which the composition is used. Generally, however, the incorporation of such inorganic filler involves a common disadvantage that it has unfavorable effects on the aspect of flowability. Consequently, the moldability of the composition is adversely affected in the process of injection molding, where parts having a thin or dimensionally long, or complex structure are to be produced, and there may be exceptional cases where stock charge insufficiency is caused, or where even if stock charge is sufficient, molding efficiency is adversely affected particularly in the case of multiple molding, or high-speed and large-quantity molding.

Such unfavorable effect on the composition in respect of flowability and moldability are especially noticeable where the inorganic filler is present in conjunction with a flame retarder; and since the presence of the flame retarder may accelerate decomposition of the polyester component and limit the possibility of increasing the temperature of the resin to compensate the unfavorable effect on flowability, difficulties encountered are all the more severe.

However, the composition in accordance with the invention, by virtue of a specific modified ethylene polymer it contains therein, provides considerable improvement against

- 11 -

the difficulty of decreased flowability due to the presence of such flame retarder and such inorganic filler.

The modified ethylene copolymer used as a flowability improver in this invention is a copolymer obtained by grafting and $\alpha$-, $\beta$-unsaturated carboxylic acid or a derivative thereof to a copolymer of an ethylene polymer or ethylene with an $\alpha$-olefin having 3 or more carbon atoms. Examples of such copolymer are modified ethylene copolymers having a crystallinity of less than 50% which are obtained by grafting 0.05-5.0% by weight, preferably 0.05-3.0% by weight, of an $\alpha$-, $\beta$-unsaturated carboxylic acid or a derivative thereof to respective copolymers of an ethylene polymer or ethylene and propylene; ethylene and butene-1, ethylene and hexene-1, ethylene and 4-methylbutene-1, and ethylene and 4-methylbutene-1. The $\alpha$-, $\beta$-unsaturated carboxylic acid or derivative thereof referred to herein is, for example, any of the following: acrylic acid, mathacrylic acid, ethacrylic acid, maleic acid, fumaric acid, and esters, anhydrides, and imides of these acids. More particularly, maleic anhydride and imide maleate are preferred grafting ingredients. Addition of such modified ethylene copolymer is 1-25% by weight, preferably 2-15% by weight, relative to the total weight of the composition. Even a smaller amount of addition may be effective. However, if the addition is too small, its effect on flowability will be insignificant, and if it is excessive, its

- 12 -

effect is rather unfavorable, because some decrease in the mechanical properties may result.

Further, it is possible to incorporate into the composition of the invention other kinds of known additives, such as for example lubricant, nucleating agent, parting agent, antistatic agent, other surface active agent, plasticizer, colorant, thermal stabilizer, and ultraviolet stabilizer, in order to impart desired properties according to the purposes for which the composition is used.

The composition according to the invention may be easily prepared according to any known method conventionally employed in the preparation of resin compositions. For example, any of the following methods may be employed: i) a method wherein after individual components are mixed, the mixture is kneaded and extruded into pellets and then molding is carried out; ii) another method wherein pellets of different compositions are first prepared, the pellets being mixed in prescribed quantities for molding, and after molding, molded products having a predetermined composition are obtained; and iii) another method wherein one or more of the individual components are charged directly into the molding machine.
[Examples]

To further illustrate the invention several examples are given below, but it is to be understood that the invention is not limited by these examples.

- 13 -

Methods employed in measuring the properties shown in the examples are as follows.

1)  Method for measurement of flowability (bar flow length)

Pellets formed of compositions according to the invention were molded into specified test pieces (5 mm wide x 0.3 mm thick) by means of a molding machine set to the following conditions and a specified thin-bar flow testing mold, and flowability evaluation was made on the basis of the lengths of flow (lengths of resin fill) measured with the test pieces.

| | |
|---|---|
| Cylinder temperature | 240°C |
| Injection pressure | 900 kg/cm$^2$ |
| Mold temperature | 60°C |

2)  Methods for property measurement

| | |
|---|---|
| Tensile tests | according to ASTM D-638 |
| Impact strength | according to ASTM D-256 |
| Flammability test | according to UL-94 |
| Melt index (MI) | according to ASTM D-238 |

Examples 1-5, Comparative Example 1

A polybutylene terephthalate having an inherent viscosity of 1.0 and various different additives were mixed in such various proportions as shown in Table 1, and individual mixtures were extruded into pellets through a vented extruder of 40 mmø; thus, compositions according to the invention were obtained.

Then, above said flowability tests was carried out with these pellets.  Whilst, another set of test pieces was molded, and evaluation was made as to their mechanical properties. ✝ The results are shown in Table 1.  For the sake of comparison, tests were similarly made with pellets which contain no modified ethylene copolymer and evaluation was also made.

- 15 -

Table 1

| Additive/Property | Unit | Example | | | | | Comp.Examp. |
|---|---|---|---|---|---|---|---|
| | | 1 | 2 | 3 | 4 | 5 | 1 |
| Polybutylene terephthalate | wt % | 57.6 | 54.6 | 49.6 | 44.6 | 54.6 | 58.6 |
| Modified ethylene copolymer A (Note) | " | 2 | 5 | 10 | 15 | - | - |
| Modified ethylene copolymer B (Note) | " | - | - | - | - | 5 | - |
| Glass fiber | " | 20 | 20 | 20 | 20 | 20 | 20 |
| Brominated polycarbonate | " | 10 | 10 | 10 | 10 | 10 | 10 |
| Antimony trioxide | " | 6.4 | 6.4 | 6.4 | 6.4 | 6.4 | 6.4 |
| Asbestos | " | 4 | 4 | 4 | 4 | 4 | 4 |
| Bar flow length | mm | 8.7 | 13.3 | 17.8 | 21.3 | 11.0 | 4.6 |
| Tensile strength | kg/cm$^2$ | 1270. | 1069 | 962 | 853 | 1192 | 1337 |
| Tensile elongation | % | 2.5 | 2.5 | 2.5 | 2.5 | 2.5 | 2.5 |
| Impact value (counter notch) | kgcm/cm | 54 | 52 | 50 | 48 | 53 | 51 |
| Burning characteristics | | V-O | V-O | V-O | V-O | V-O | V-O |
| MI | g/10 min | 0.86 | 0.93 | 1.15 | 1.33 | 1.82 | 0.77 |

(Note)   A) a copolymer composed of an ethylene-butene-1 copolymer to which about 2% of maleic anhydride is grafted.

B) a copolymer composed of an ethylene-propylene compolymer to which about 2% of maleic anhydride is grafted.

- 16 -

As is apparent from the above description and examples, the composition according to the invention comprises a thermoplastic resin composed principally of polyester, a flame retarder and, as required, an inorganic filler incorporated into the resin, and a specific modified ethylene copolymer compounded therewith. By virtue of the presence of this modified ethylene copolymer, it has been confirmed, difficulties in respect of flowability and moldability due to the incorporation of the flame retarder and moldability are remarkably overcome without detriment to the various favorable effects in flame retardancy and such mechanical characteristics as strength and rigidity, thermal resistance, deformation resistance, and also electrical characteristics, which result from the incorporation of the flame retarder and inorganic filler; and any possible inconveniences such as stock charge insufficiency in the case of thin, dimensionally long, and complex structure molding can be easily avoided; furthermore considerable improvements in molding efficiency can be obtained, such as multiple molding in one shot and reduced molding cycle.

<u>CLAIMS</u>

1. A polyester composition which comprises (A) 50% to 98% by weight of a thermoplastic polyester, (B) 1% to 25% by weight of a flame retarding agent and (C) 1% to 25% by weight of a modified polymer of ethylene which has been obtained by graft polymerizing alpha-, beta-unsaturated carboxylic acid or a derivative thereof on a polymer of ethylene or a copolymer of ethylene and alpha-olefin having 3 or more carbon atoms.

2. A composition as claimed in Claim 1, which further contains up to 60% by weight  of an inorganic filler.

3. A composition as claimed in Claim 1, in which said flame retarding agent is an organic, halogen containing compound.

4. A composition as claimed in Claim 2, in which said inorganic filler is glass fibers.

5. A composition as claimed in Claim 1, which further contains an assistant for the flame retarding agent.

6. A composition as claimed in Claim 5, in which said assistant is a metallic oxide or hydroxide or hydroxide, and being added in the amount 1% to 10% by weight.

7. A polyester composition as claimed in Claim 1, in which said thermoplastic polyester comprises an aromatic polyester of an aromatic dicarboxylic acid residue and a diol residue or an oxycarboxylic acid residue.